Europäisches Patentamt

European Patent Office

Office européen des brevets

(19)

(11) Publication number: **0 137 080**
: **B1**

(12) **EUROPEAN PATENT SPECIFICATION**

(45) Date of publication of patent specification: **07.01.88**

(51) Int. Cl.⁴: **B 25 G 3/38**

(21) Application number: **83305332.5**

(22) Date of filing: **13.09.83**

(54) Universal hinge-type joint.

(43) Date of publication of application:
**17.04.85 Bulletin 85/16**

(45) Publication of the grant of the patent:
**07.01.88 Bulletin 88/01**

(84) Designated Contracting States:
**AT BE DE FR GB IT NL SE**

(56) References cited:
**FR-A-1 411 175**
**FR-A-2 453 721**
**US-A-2 722 031**
**US-A-3 332 255**

(73) Proprietor: **Padco Inc.**
**2230 Elm Street Southeast**
**Minneapolis, MN., 55413 (US)**

(72) Inventor: **Goldstein, Edward J.**
**2230 Elm Street Southeast**
**Minneapolis, MN 55413 (US)**

(74) Representative: **Fry, Alan Valentine**
**FRY HEATH & CO. Seloduct House Station Road**
**Redhill Surrey RH1 1NF (GB)**

EP 0 137 080 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

## 1. Field of the invention

The present invention relates to joints. In particular, it relates to joints that connect implement members allowing movement of one of the implement members in a plurality of planes.

## 2. Description of the prior art

The ability to use an implement in a variety of angular positions is quite important. However, most implements typically have the functional portion of the implement rigidly attached to the handle thereby limiting the use of the implement or resulting in an awkward use of the implement. For example, in a sanding tool, a handle is rigidly attached to a sanding tool pad. In the course of sanding drywall using an extension handle, there arises many situations in which the sanding tool has to be held in an awkward position in order to properly sand the surface of the drywall.

In the prior art, there have been various attempts to solve the problem of positioning an implement in an angular position. For the most part, the solutions have been bulky and cumbersome joints that include several distinct parts that slidably engage each other. These types of joints are difficult to assemble and costly to produce, increasing the cost of the implement substantially. In addition, several parts slidably engaging each other eventually wear out over time, break or bind. Some examples of these joints are set forth in the patents briefly described below.

The Bailey Patent 3,720,976 shows a toilet brush having a ball joint pivotally connecting the handle to the brush. A ball joint, of course, is an expensive type of joint and is not suitable for application in a wide variety of implements.

The Johnson et al Patent 3,768,110 shows a swivel mop head having a single continuous serpentine slot disposed through a mid-portion of the body of the mop head. The portions of the mop head defined by parallel portions of the serpentine slot are capable of flexing upwardly and downwardly and angularly, providing the mop with the capability of being used in various angular positions. However, this type of joint would be quite difficult to apply to a smaller implement.

Several other examples of various joints for large implements, such as mops, brooms, toilet brushes and scrubbers are discussed in the following patents:

| Inventor | U.S. Patent No. |
|---|---|
| Howell | 763,100 |
| Lewis | 504,452 |
| Allen | 3,340,556 |
| Ames | 3,483,662 |
| Bailey | 3,374,498 |
| Thielen | 3,778,860 |
| Numbers et al | 3,820,187 |
| O'Connor | 4,204,295 |

A smaller implement having a joint is shown in the Burns et al Patent 3,369,268. A paint applicator includes a handle that is movable in one angular direction with respect to the applicator. Although the handle is movable with respect to the paint applicator, the movement is limited to just one direction.

In the Polsfuss Patent 4,038,716 a paint roller is disclosed that is rotatably mounted to an axle. A handle, in turn, is pivotally attached to the axle, permitting pivotal movement in an angular direction within one plane. Again, the movement between the handle and the roller is limited to one direction in a plane.

FR—A—2453721 discloses a body of plastics material which can be cold-drawn by folding or bending. The body of plastics includes a plurality of substantially rigid sections connected by elongate flexible portions defined by score lines about which the body can bend. In one embodiment, these score lines are orientated diagonally to intersect both the longitudinal central axis of the body and one another in an "X" configuration. However, the plastics body disclosed by FR—A—2453721 permits bending about only one of the several score lines.

In the present invention, a further flexible portion is provided which intersects two diagonally orientated flexible portions and is orientated substantially perpendicular to the longitudinal central axis of the body to permit bending simultaneously about multiple axes of rotation and the transmission of force generally along the longitudinal central axis of the body with one of two implement members connected by the body in a range of angular positions with respect to the other implement member.

## Brief description of the drawings

Figure 1 is a perspective view of a preferred embodiment of the universal hinge-type joint of the present invention in use in a sanding tool;

Figure 2 is a side elevational view of the joint in the sanding tool;

Figure 3 is a perspective view of the hinge-type joint rotated in one direction;

Figure 4 is a perspective view of the hinge-type joint rotated in a direction opposite to that shown in Figure 3;

Figure 5 is a perspective view of another preferred embodiment of the hinge-type joint in use in a sanding tool;

Figure 6 is an enlarged fragmentary top plan view of the embodiment of Figure 5 of the hinge-type joint;

Figure 7 is a side elevational view of the embodiment illustrated in Figure 5;

Figure 8 is a perspective view of the preferred embodiment illustrated in Figure 5 rotated in one direction;

Figure 9 is a perspective view of the preferred embodiment illustrated in Figure 5 rotated in a direction opposite to that shown in Figure 8.

Detailed description of the preferred embodiments

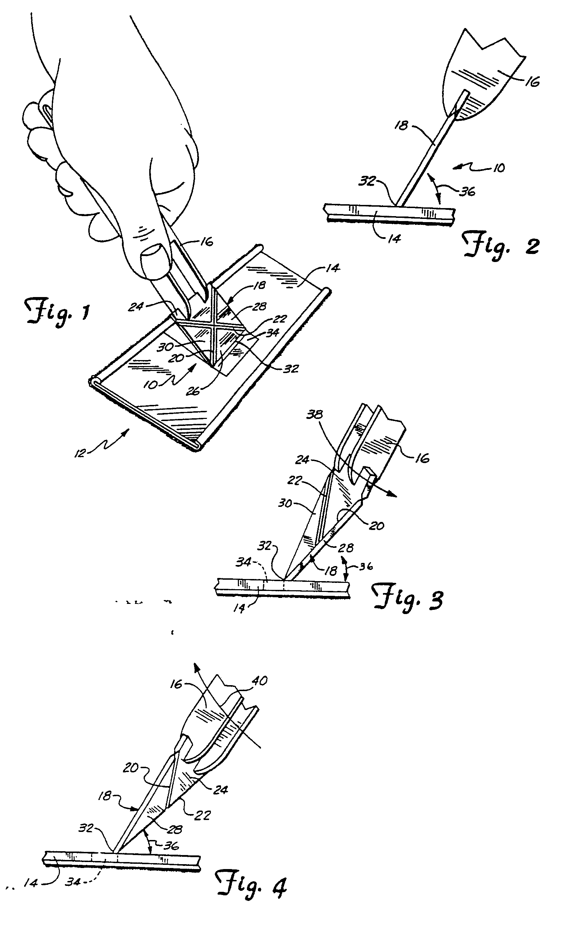

The universal hinge-type joint of the present invention, generally indicated at 10, is illustrated in a preferred use in a sanding tool 12 in Figure 1. To more clearly describe the present invention, like reference characters will be used to indicate like elements throughout the figures. The sanding tool 12 includes a suitable sanding pad 14 and a handle 16. The joint 10 connects the pad 14 to the handle 16.

The joint 10 includes a preferred substantially flat body 18 and a first and second score lines 20, 22, defining flexible portions. The score lines 20, 22 bisect each other in a central portion of the flat body 18, dividing the flat body 18 into four discrete substantially rigid sections 24, 26, 28 and 30. The score lines 22, 20 are a reduced thickness and sufficiently deep to allow bending of the flat body 18 along the score lines. The substantially rigid sections 24, 26, 28 and 30 provide sufficient support for motive force to be transmitted from the handle 16 to the pad 14.

Preferably, a third score line 32 is positioned between the rigid section 26 and the pad 14 defining a connecting section 34 which is fixedly attached to the pad 14. The third score line 32 is also sufficiently deep to allow bending of the flat body 18 along the direction of arrow 36, as illustrated in Figure 2.

The joint 10 is a unitary joint preferably made of a suitable plastic material, such as polypropylene, that allows repeated bending along the score lines 20, 22 and 32 without breaking. The score lines are disposed on both sides of the flat body and are produced by a suitable "scoring" process, or alternatively, are formed simultaneously with the flat body by suitable molding or stamping processes.

The movement of the universal hinge-type joint of the present invention is more fully illustrated in Figures 3 and 4. In Figure 3, the handle 16 is rotated along its axis in a direction of arrow 38 and along arrow 36, thereby bending the main body along score lines 20 and 32. When the handle 16 is rotated in a direction of arrow 40 and arrow 36, as illustrated in Figure 4, the main body 18 is bent along score lines 22 and 32. As is easily understood from the above, the rigid sections 24, 26, 28 and 30 of the main body 18 are bendable along the score lines in a plurality of planes permitting the use of the sanding tool in a wide range of angular positions. The rigid sections are rotatable along axes defined by the score lines which are non-parallel to each other and to a major axis defined by the handle 16 and the body 18 when in a non-rotated position. The universal hinge-type joint is adaptable for use with a wide variety of implements and not restricted to just sanding tools.

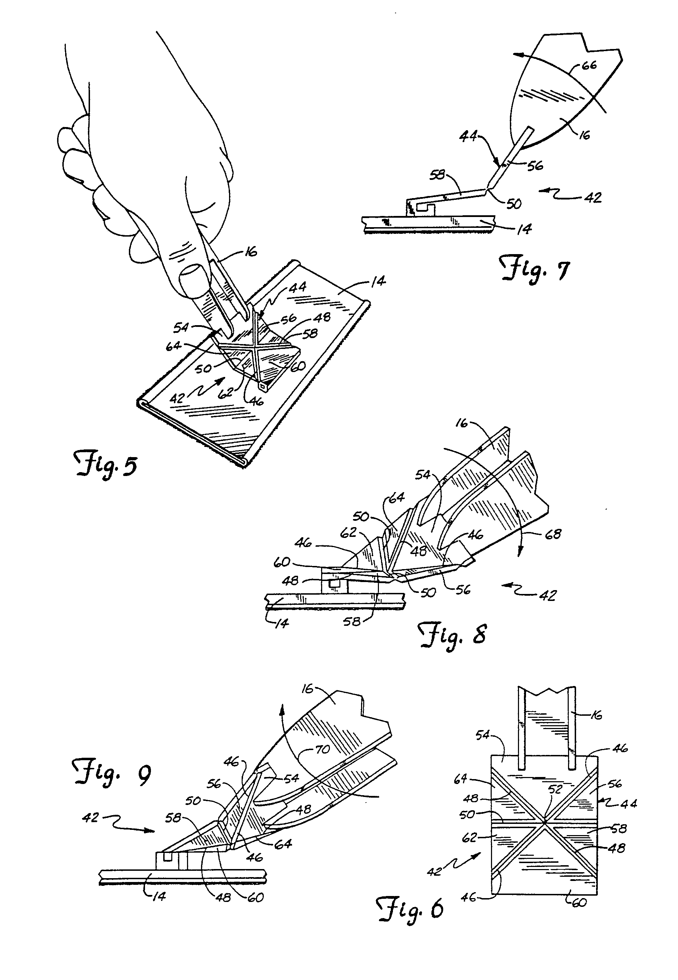

A preferred alternative embodiment of the universal hinge-type joint of the present invention is illustrated in Figures 5—9.

In Figures 5 and 6, the alternative embodiment of the universal hinge-type joint is generally indicated at 42. The joint 42 similarly has a substantially flat body 44 which is attached at one end to the handle 16 of the sanding tool and to the pad 14 at another end. The joint 42 is similarly constructed with first and second score lines 46, 48 bisecting each other in a central portion of the flat body 44. A third score line 50 is positioned in the flat body 44 such that the third score line bisects the score lines 46, 48 at their point of intersection 52. Consequently, the score lines 46, 48 and 50 define substantially rigid sections 54, 56, 58, 60, 62 and 64. The rigid section 54 is fixedly attached to the handle 16 and the rigid section 60 is fixedly attached to the pad 14. The score lines 46, 48 and 50 are sufficiently deep such that the main body is bendable along the score lines with the rigid sections providing sufficient beam strength to the joint 42 for motive force to be transmitted from the handle 16 to the pad 14 for sanding.

The movement of the preferred embodiment shown in Figures 5 and 6 is illustrated in Figures 7 through 9. As illustrated in Figure 7, the joint 42 is bendable along score line 50 in a direction of arrow 66 in a wide angular range. In Figure 8, the joint 42 allows the handle 16 to be rotated along its axis in a direction of arrow 68 for use in a wide range of angular positions. Alternatively, the handle 16 may be rotated in an opposite direction as indicated by arrow 70 in Figure 9. Although the joint 42 is bendable in a plurality of planes allowing use of the sanding tool in a wide range of angular positions, the rigid sections 54, 56, 58, 60, 62 and 64 provide sufficient beam strength such that motive force is transmitted from the handle 16 to the pad 14 for easy sanding of a drywall or other surface.

Another alternative embodiment (not shown) of the present invention includes a joint of substantial thickness. The joint is bendable along flexible portions of reduced thickness which define the rigid sections of the joint. The flexible portions are preferably V-shaped notches. A pair of V-shaped notches, located on opposite sides of the body, project inwardly into the body of the joint and form a flexible portion. A second pair of V-shaped notches is located in a non-parallel relationship to the previous pair of notches for forming a second flexible joint. Preferably, the two flexible portions are located such that their axis of rotation are substantially perpendicular to each other. Other V-shaped notches may be added to form more flexible portions which increase the angular range of rotation of the joint.

The present invention is not limited to sanding tools but may be included in a wide variety of implements including such implements as paint applicators. In addition, a larger embodiment of the hinge is usable, for example, in toilet bowl brushes, mops and other implements that are slid along a surface. Further, alternative embodiments of the present invention can be used to transmit power such as in a power train of small motors and in small tools where the transfer of power in an angular direction is desired.

## Conclusion

The universal hinge-type joint of the present invention is a significant improvement over prior art joints for permitting use of implements in various angular positions. First, the joint is an integral unit, less prone to failure over time, and very inexpensive to manufacture. Second, the joint being made of a light plastic material does not significantly add to the weight of the implement. Third, the joint is adaptable for use in a great variety of implements, permitting use of such implements in a wide range of angular positions.

Although the present invention has been described with reference to preferred embodiments, workers skilled in the art will recognize that changes may be made in form and detail without departing from the scope of the invention as defined by the appended claims. For example, although the fixed attachments of joints 10 and 42 to handle 10 and to the pad were illustrated as permanent bonds, the present invention is equally applicable to tools in which a releasable connection is made between the joint and either the handle or the tool head, or both. This releasable connection may, for example, be in the form of a snap lock connector, part of which is carried by the joint and the other part of which is carried by the member to which the joint is connected.

## Claims

1. A flexible force transmitting joint for connecting first and second implement members, the joint comprising an integral body including a plurality of substantially rigid sections connected by elongate flexible portions defining axes of rotation about which the body can bend, the flexible portions being orientated diagonally to intersect both the longitudinal central axis of the body and one another in an "X" configuration, the joint being characterised by a further flexible portion (32 or 50) which intersects the diagonally orientated flexible portions (20, 22 or 46, 48) and is orientated substantially perpendicular to the longitudinal central axis of the body (18 or 44) to permit bending simultaneously about multiple axes of rotation and the transmission of force generally along the longitudinal central axis of the body with one implement member (16) in a range of angular positions with respect to the other implement member (14).

2. A joint as claimed in claim 1 characterised in that the integral body is made of a moulded plastics material.

3. A joint as claimed in claim 1 or claim 2 characterised in that the integral body is substantially flat and wherein the flexible portions are score lines.

4. A joint as claimed in claim 3 characterised in that two diagonally orientated flexible portions (20, 22) intersect each other and the longitudinal axis of the body at a common point proximate a central portion of the body to define four substantially rigid sections (24, 26, 28, 30).

5. A joint as claimed in claim 4 characterised in that the further flexible portion (32) orientated substantially perpendicular to the longitudinal axis of the body is positioned between one rigid section (26) and the implement member (14) connected to the body end (34) adjacent that rigid section.

6. A joint as claimed in claim 3 characterised in that the further flexible portion (50) orientated substantially perpendicular to the longitudinal axis of the body is positioned to intersect the two diagonally orientated flexible portions (46, 48) at a common intersection point.

7. A flexible force transmitting joint for connecting first and second implement members, the joint comprising an integral body including a plurality of substantially rigid sections connected by elongate flexible portions defining axes of rotation about which the body can bend, the flexible portions being orientated diagonally to intersect both the longitudinal central axis of the body and one another in an "X" configuration, the joint being characterised by a further flexible portion (50) orientated substantially perpendicular to the longitudinal central axis of the body (44) and positioned to intersect the two diagonally flexible portions (46, 48) at the intersection point of their "X" configuration to permit bending simultaneously about multiple axes of rotation and the transmission of force generally along the longitudinal central axis of the body with one implement member (16) in a range of angular positions with respect to the other implement member (14).

## Patentansprüche

1. Flexibles kraftübertragendes Gelenk zur Verbindung eines ersten Geräteteils mit einem zweiten, wobei das Gelenk einen integralen Körper mit mehreren, im wesentlichen starren Abschnitten umfaßt, die durch langgestreckte flexible Teile verbunden sind, welche Drehachsen definieren, um die der Körper ausgebogen werden kann; die flexiblen Teile sind diagonal orientiert, um sowohl die zentrale Längsachse des Körper als auch eine weitere Achse in X-Form zu schneiden, gekennzeichnet, durch einen weiteren flexiblen Teil (32 oder 50), der die diagonal-orientierten flexiblen Teile (20, 22 oder 46, 48) schneidet und im wesentlichen senkrecht zur Längsmittelachse des Körpers (18 oder 44) orientiert ist, um eine gleichzeitige Biegung um mehrere Drehachsen zu ermöglichen und um die Kraft allgemein über die zentrale Längsachse des Körpers zu übertragen, wobei der eine Geräteteil (16) in einem Bereich von Winkelstellungen gegenüber dem anderen Geräteteil (14) angeordnet ist.

2. Gelenk nach Anspruch 1, dadurch gekennzeichnet, daß der integrale Körper aus geformten Plastikmaterial besteht.

3. Gelenk nach den Ansprüchen 1 oder 2, dadurch gekennzeichnet, daß der integrale Körper im wesentlichen flach ist und die flexiblen Abschnitte Kerblinien sind.

4. Gelenk nach Anspruch 3, dadurch gekennzeichnet, daß zwei diagonal orientierte flexible Abschnitte (20, 22) sich gegenseitig und die Längsachse des Körpers in einem gemeinsamen Punkt in der Nähe eines zentralen Teils des Körpers schneiden, um vier im wesentlichen starre Abschnitte (24, 26, 28, 30) zu definieren.

5. Gelenk nach Anspruch 4, dadurch gekennzeichnet, daß der weitere flexible Abschnitt (32), der im wesentlichen senkrecht zur Längsachse des Körpers orientiert ist, zwischen einem starren Abschnitt (26) und dem Geräteteil (14) liegt und mit dem Körperende (34) benachbart zu jenem starren Abschnitt verbunden ist.

6. Gelenk nach Anspruch 3, dadurch gekennzeichnet, daß der weitere flexible Abschnitt (50) im wesentlichen senkrecht zur Längsachse des Körpers so positioniert ist, daß die beiden diagonal orientierten flexiblen Abschnitte (46, 48) in einem gemeinsamen Schnittpunkt geschnitten werden.

7. Flexibles Kraftübertragungsgelenk zur Verbindung von ersten und zweiten Geräteteilen, welches Gelenk einen integralen Körper aufweist, der mehrere im wesentlichen starre Abschnitte umfaßt, die durch langgestreckte flexible Abschnitte verbunden sind, die Drehachsen definieren, um die der Körper gebogen werden kann, wobei die flexiblen Abschnitte diagonal orientiert sind, um sowohl die zentrale Längsachse des Körpers als auch einander in X-Form zu schneiden, gekennzeichnet durch einen weiteren flexiblen Teil (50), der im wesentlichen senkrecht zur zentralen Längsachse des Körpers (44) orientiert und so angeordnet ist, daß die beiden diagonalen flexiblen Abschnitte (46, 48) an dem Schnittpunkt der X-Konfiguration geschnitten werden, um eine Biegung gleichzeitig um mehrere Drehachsen zu ermöglichen und um eine Kraft im wesentlichen längs der mittleren Zentralachse des Körpers zu übertragen, wobei ein Geräteteil (16) in einem Winkelbereich gegenüber dem anderen Geräteteil befindlich ist.

**Revendications**

1. Articulation flexible de transmission d'une force, destinée à raccorder un premier et un second élément d'un instrument, l'articulation comprenant un corps en une seule pièce ayant plusieurs tronçons sensiblement rigides raccordés par des parties flexibles allongées délimitant des axes de rotation autour desquels le corps peut fléchir, les parties flexibles étant orientées en diagonale afin qu'elles se recoupent l'une l'autre avec une configuration en X et qu'elles recoupent l'axe central longitudinal du corps, l'articulation étant caractérisée par une partie flexible supplémentaire (32 ou 50) qui recoupe les parties flexibles orientées en diagonale (20, 22 ou 46, 48) et qui est orientée en direction sensiblement perpendiculaire à l'axe longitudinal central du corps (18 ou 44) afin de permettre une flexion simultanément autour de plusieurs axes de rotation et la transmission d'une force de manière générale suivant l'axe longitudinal central du corps, un élément (16) de l'instrument ayant toute une plage de positions angulaires par rapport à l'autre élément (14) de l'instrument.

2. Articulation selon la revendication 1, caractérisée en ce que le corps en une seule pièce est formé d'une matière plastique moulée.

3. Articulation selon l'une des revendications 1 et 2, caractérisée en ce que le corps en une seule pièce est sensiblement plat, et les parties flexibles sont des lignes d'entaille.

4. Articulation selon la revendication 3, caractérisée en ce que les deux parties flexibles (20, 22) orientées en diagonale se recoupent mutuellement et recoupent l'axe longitudinal du corps en un point commun proche de la partie centrale du corps afin de délimiter quatre tronçons sensiblement rigides (24, 26, 28, 30).

5. Articulation selon la revendication 4, caractérisée en ce que la partie flexible supplémentaire (32) ayant une orientation sensiblement perpendiculaire à l'axe longitudinal du corps est disposée entre un premier tronçon rigide (26) et l'élément (14) de l'instrument qui est connecté à l'extrémité (34) du corps qui est adjacente à ce tronçon rigide.

6. Articulation selon la revendication 3, caractérisée en ce que la partie flexible supplémentaire (50) d'orientation sensiblement perpendiculaire à l'axe longitudinal du corps est disposée afin de recouper les deux parties flexibles (46, 48) orientées en diagonale à un point commun d'intersection.

7. Articulation flexible de transmission d'une force, destinée à raccorder un premier et un second élément d'un instrument, l'articulation comprenant un corps en une seule pièce qui comporte plusieurs tronçons sensiblement rigides connectés par des parties flexibles allongées délimitant des axes de rotation autour desquels le corps peut fléchir, les parties flexibles étant orientées en diagonale afin qu'elles se recoupent mutuellement avec une configuration en X et qu'elles recoupent l'axe longitudinal central, l'articulation étant caractérisée par une partie flexible supplémentaire (50) orientée en direction sensiblement perpendiculaire à l'axe longitudinal central du corps (44) et disposée de manière qu'elle recoupe les deux parties flexibles (46, 48) disposées en diagonale au point d'intersection de la configuration en X, afin de permettre une flexion simultanée autour de plusieurs axes de rotation et la transmission d'une force de manière générale suivant l'axe central longitudinal du corps, un premier élément (16) de l'instrument pouvant prendre toute une plage de positions angulaires par rapport à l'autre élément (14) de l'instrument.

Fig. 1

Fig. 2

Fig. 3

Fig. 4

1

0 137 080

Fig. 7

Fig. 5

Fig. 8

Fig. 9

Fig. 6

2